# EUROPEAN PATENT APPLICATION

(11) **EP 4 383 524 A1**
(43) Date of publication of application: **12.06.2024**
(21) Application number: 22212045.3
(22) Date of filing: 07.12.2022
(51) Int. Cl.: H02K 3/18, H02K 1/14, H02K 3/52

(54) **MOTOR STATOR**

(71) Applicant: Fukuta Electric & Machinery Co., Ltd., Miaoli County 366003 (TW)
(72) Inventor: CHANG, Chin-Feng, Miaoli County 366003 (TW); CHU, Chih-Meng, Miaoli County 366003 (TW); WU, Zhi-Zheng, Miaoli County 366003 (TW); CHANG, Chen-Hui, Miaoli County 366003 (TW)
(74) Representative: Straus, Alexander

(57) **Abstract**

A motor stator has an annular stator core, and a plurality of tooth portions spaced on the inner surface of the annular stator core which has a slot formed on each of two sides of each of the tooth portions. Each of the tooth portions has a coil wound and a portion of the coil is located in the two slots of each of the tooth portions. Each of the coils is formed by a metal wire coiled around a bobbin several times from the inner side to the outer side. The bobbin has an inner guide frame and an outer guide frame, both of them have a structure with a bottom plate and a side plate that are arranged vertically so that the coil can be attached to the bobbin to miniaturize the motor stator.

## Description

### FIELD OF THE INVENTION

The present disclosure relates to a motor stator, more particularly, a motor stator that can increase power by maximizing the coil fill-in ratio with a small size.

### BACKGROUND OF THE INVENTION

Due to the rapid development of motor technology in these years, the development of the motor tends to be a compact and high-power design. Therefore, it is necessary to redesign the stator structure in order to meet the trend. Generally speaking, the larger the coil fill-in ratio on the stator, the stronger the magnetic field generated, and the higher the power output.

In view of the technological development at present, the winding density of the coil is low, in order to increase the coil winding on the stator structure, the corresponding slot has to be enlarged, which also leads to the overall size and weight of the motor increase. Therefore, how to maintain the motor in a smaller size and output with higher power at the same time is an issue that needs to be improved in the current technology.

### SUMMARY OF THE INVENTION

Based on the above-mentioned shortcomings, the purpose of the present disclosure is to provide a motor stator, particularly a motor stator with a small size and a maximum coil fill-in ratio that can increase power.

A motor stator is provided according to the purpose of the present disclosure, comprising an annular stator core, a plurality of tooth portions spaced on the inner surface of the annular stator core and protruded toward the center of the annular stator core, each of the tooth portions having a slot formed on each of the two sides of the tooth portions and each of the tooth portions having a coil winding and a portion of the coil being located in the two slots of each of the tooth portions. Wherein, a bobbin is provided between each of the coils and each of the tooth portions, and each of the coils is formed by winding a metal wire around the bobbin several times, the thickness of the metal wire is decreased gradually from one end to the other end.

Wherein, the bobbin has an inner guide frame and an outer guide frame and both have a bottom plate and a side plate set on the bottom plate protruded from the bottom plate toward one side, and the side plate is set vertically with the bottom plate.

Preferably, both the inner and outer guide frames have a T-shaped cross-sectional profile.

Preferably, the coil is attached to the bobbin.

Preferably, each of the adjacent turns in each of the coils is attached to each other and the cross-sectional area of each turn in each of the coils is substantially the same.

Preferably, there is also a three-phase bus-bar provided in the annular stator core having three conducting elements and a neutral element, each conducting element has a plate, a connection end, and four welding ends where the welding end is connected to one of the ends of the metal wire of one of the coils respectively.

Preferably, the cross-sectional profile of each coil is trapezoidal.

Preferably, the width of each metal wire is increased gradually from one end to the other end, so that the cross-sectional profile of each coil is in the shape of a trapezoid.

Preferably, each of the coils occupies 80% of the capacity of two slots of each of the tooth portions.

Preferably, each of the tooth portions is secured to the annular stator core by a wedge buckle structure.

### BRIEF DESCRIPTION OF THE DRAWINGS

FIG. 1 is a schematic diagram of an embodiment of the present disclosure;
FIG. 2 is a cross-sectional view of an embodiment of the present disclosure;
FIG. 3 is a partial enlargement of FIG. 2;
FIG. 4 is an exploded view of the components of the tooth portion, bobbin, and coil of the embodiment of the present disclosure; and
FIG. 5 is an exploded view of the components of the embodiment of the present disclosure.
FIG.6 is a top view schematic diagram of coil of the present disclosure.

### DESCRIPTION OF THE PREFERRED EMBODIMENTS

In order to clearly illustrate the specific manner of implementation, the structure, and the effect achieved by the present disclosure, the following embodiments are provided and illustrated with drawings.

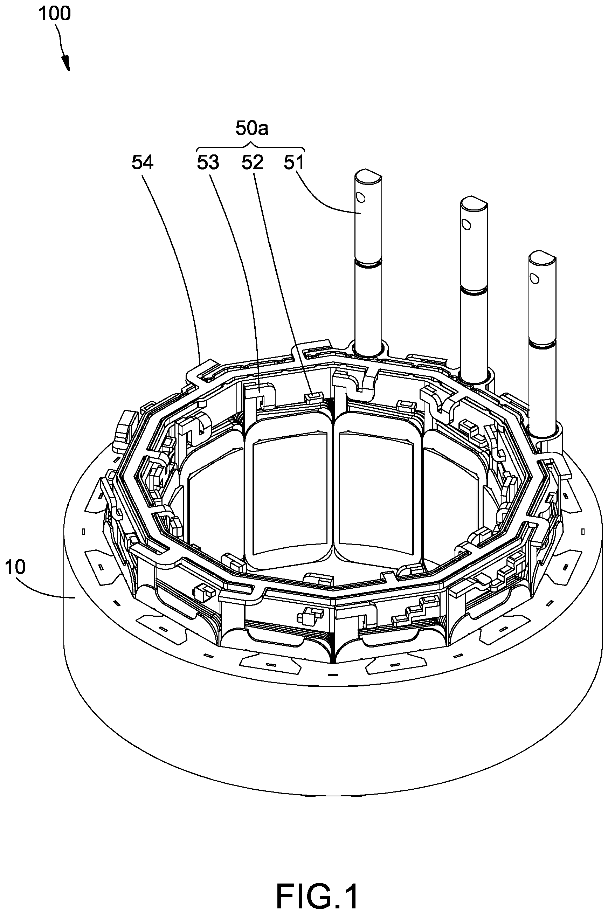

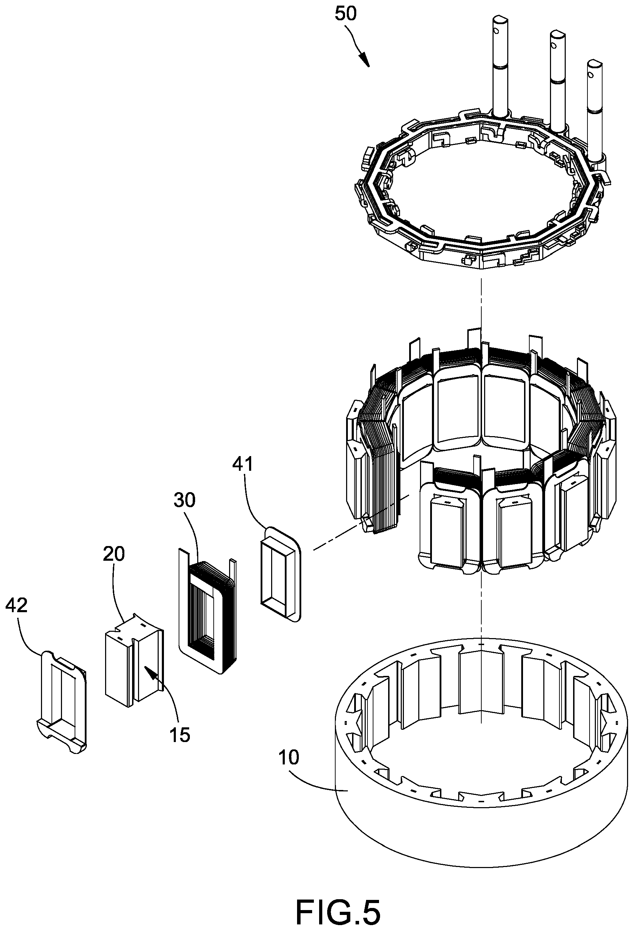

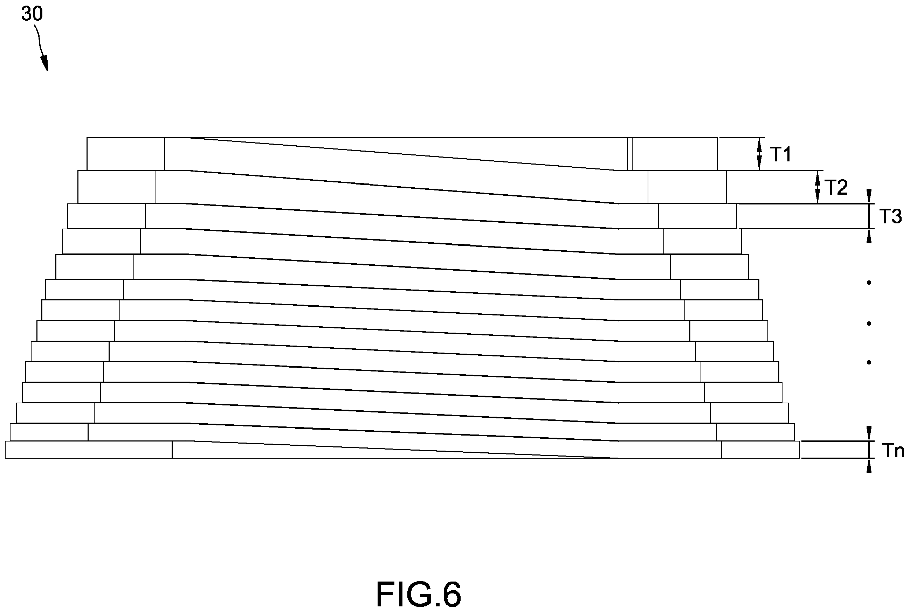

The following description is based on the surface of the annular stator core 10 near the center of the circle of the motor stator 100 as the inner side. The descriptions of the orientation, such as up and down, left and right, are used only to indicate the relative relationship of the components in order to conform to the common understanding of those skilled in the art. Referring to FIGS. 1 to 6, there is shown a motor stator 100 comprising an annular stator core 10, a plurality of tooth portions 20 spaced on the inner surface of the annular stator core 10 and protruded toward the center of the annular stator core 10, a slot 15 formed on each of the two sides of each of the tooth portions 20, each of the tooth portions 20 having a coil 30 wound around it and a portion of the coil 30 located in the two slots 15 of each of the tooth portions 20, and each of the tooth portions 20 is secured to the annular stator core 10 by a wedge buckle structure 21.

Wherein, a bobbin 40 is provided between each of the coils 30 and each of the tooth portions 20, and each of the coils 30 is formed by winding a metal wire 31 around the bobbin 40 several times from the inner side to the outer side, with the ends of the metal wire 31 extending upward after the coil 30 is formed. In this embodiment, the metal wire 31 is a flat copper wire. In another embodiment, the metal wire 31 may be formed into the coil 30 first and then installed on the bobbin 40.

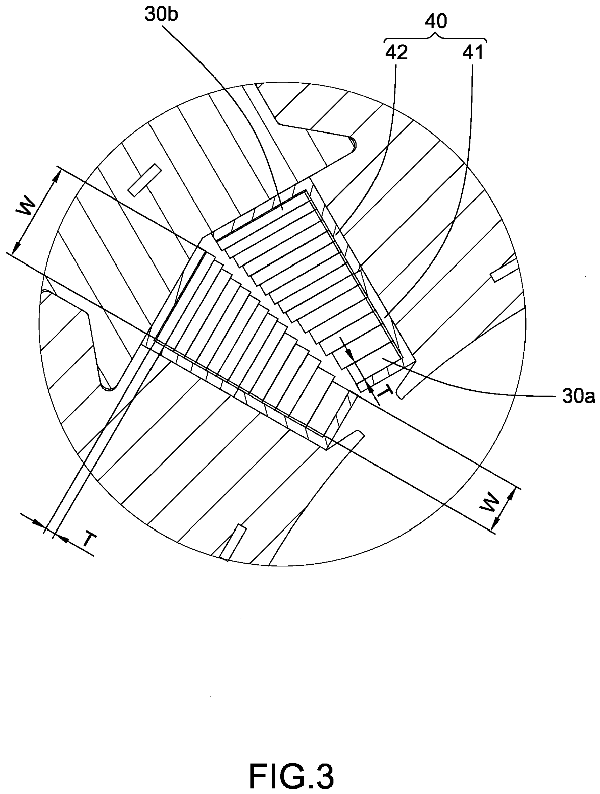

Referring to FIG. 3, the metal wire 31 is wound several times from the inner side to the outer side to form the coil 30, and the thickness T of the metal wire 31 is gradually decreased from one end 30a to the other end 30b while the width W is gradually increased from one end 30a to the other end 30b, which causes the cross-sectional area of each coil has been substantially the same (i.e., the value of the thickness T multiplied by the width W of each turn (T1,T2,T3...Tn) is substantially the same), thereby avoiding uneven current distribution when the current flows through the coil 30. However, in another embodiment, it is also possible that the coils have substantially the same thickness for each turn (T1,T2,T3...Tn) of coils and different thicknesses for different turns (T1,T2,T3...Tn) of coils, and the thickness of different turn (T1,T2,T3... Tn) of the coils are decreased gradually.

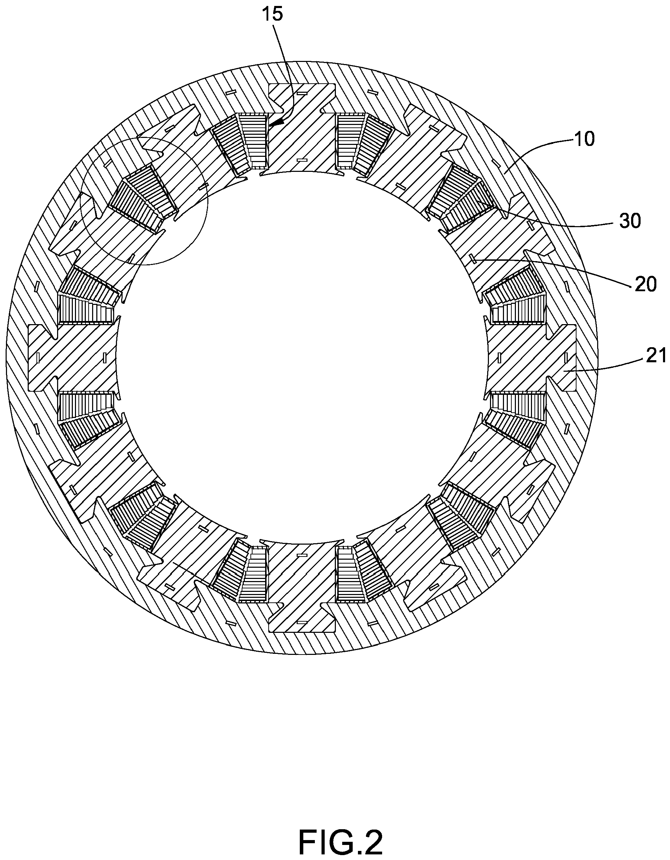

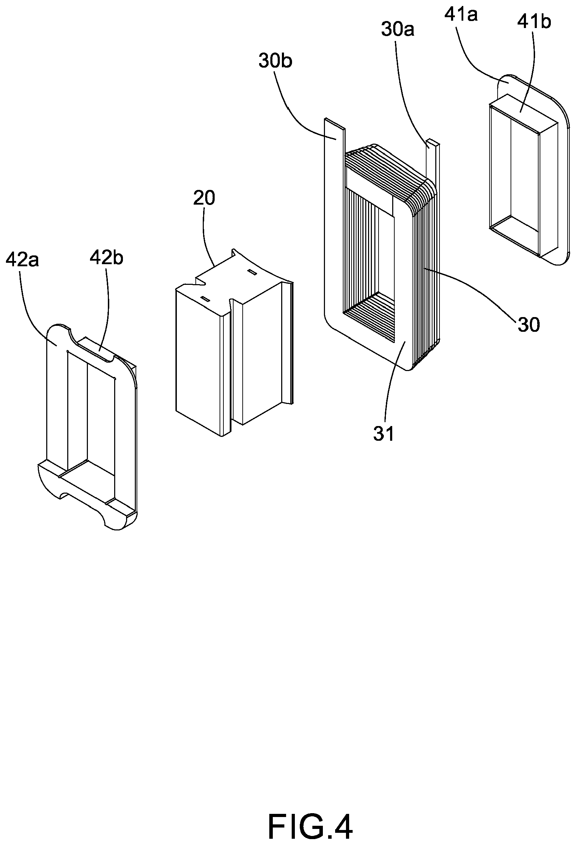

Furthermore, the bobbin 40 includes an inner guide frame 41 and an outer guide frame 42, both of them have a bottom plate 41a,42a and a side plate 41b,42b provided on the bottom plate 41a,42a, and the side plate 41b,42b is protruded towards one side so that the bottom plate 41a,42a and the side plate 41b,42b are set vertically, so that the cross-sectional profiles of the inner guide frame 41 and the outer guide frame 42 are all in a T shape (see FIG. 2 and FIG. 4). In this embodiment, due to the structure of the side plates 41b,42b and the bottom plates 41a,42a are set vertically so that the coil 30 can be attached to the bobbin 40. In addition, the installment of bobbin 40 facilitates the placement of the coils 30, so that each turn (T1,T2,T3...Tn) of the coils 30 adjacent can be attached to each other to increase the density of coil 30 winding. In this embodiment, each coil 30 occupies 80% of the capacity of the two slots 15 of each of the tooth portions 20, thereby increasing the volume utilization of the slot 15 and making it possible to minimize the motor stator 100 without the need of winding more coils around the tooth portions as in the prior art of the field.

On the other hand, when calculating the power density per unit volume of the motor, the size of the entire motor stator 100 (including the size of the annular stator core 10 and the coil 30) should be taken into account, so when the coil 30 is attached to the bobbin 40, the winding density of the coil 30 of the present disclosure will be higher and the size of the coil 30 will be reduced compared to the prior art, thereby the overall size of the motor stator 100 can be reduced but the power density per unit volume will be increased. In addition, when the size of the coil 30 is reduced, the amount of copper used in the metal wire 31 can be reduced as well which can reduce the production costs.

Further, the motor stator 100 also has a three-phase bus-bar 50 provided on one side of the annular stator core 10, the three-phase bus-bar 50 has three conducting elements 50a and a neutral element 54, and each of the conducting element 50a has a plate 52, a connection end 51, and four welding ends 53. The connection end 51 extends from the plate 52 toward the upper side, the four welding ends 53 being connected to one of the metal wires 31 of the coils 30 at one end, and the other end of the metal wire 31 which is not connected to the welding end 53 being connected to the neutral element 54. The arrangement of the plate 52, the connection end 51, and the welding end 53 of the three-phase bus-bar 50 and the configuration of the connection between the three-phase bus-bar 50 and the coils 30 are well established in the art and need not be elaborated.

The present disclosure is mainly to have the coils 30 attached to the bobbin 40, and to have each turn (T1,T2,T3... Tn) of the coils 30 adjacent to attach each other, so as to increase the occupancy rate of the coil 30 in the slot 15, in order to achieve the effect of minimizing of the volume.

## Claims

1. A motor stator(100) comprising an annular stator core(10), a plurality of tooth portions(20) spaced on the inner surface of the annular stator core(10) and protruded toward a center of the annular stator core(10), each of the tooth portions(20) having a slot(15) formed on each of two sides of the tooth portions(20), each of the tooth portions(20) having a coil(30) wound around the tooth portion(20) and a portion of the coil(30) located in the two slots(15) of each of the tooth portions(20), **characterized in that**:
a bobbin(40) is provided between each of the coils(30) and each of the tooth portions(20), each of the coils(30) is formed by winding a metal wire(31) around the bobbin(40) several times, and a thickness(T) of the metal wire(31) is gradually decreased from one end(30a) to the other end(30b).

2. The motor stator according to claim 1, wherein the bobbin(40) has an inner guide frame(41) and an outer guide frame(42).

3. The motor stator according to claims 1 or 2, wherein both the inner guide frame(41) and the outer guide frame(42) have a bottom plate(41a,42a) and a side plate(41b,42b) set on the bottom plate(41a,42a) protruded from the bottom plate(41a,42a) toward one side, and the side plate(41b,42b) is set vertically with the bottom plate(41a,42a).

4. The motor stator according to any one of claims 1 to 3, wherein both the inner guide frame(41) and outer guide frame(42) have a T-shaped cross-sectional profile.

5. The motor stator according to any one of claims 1 to 4, wherein the coil(30) is attached to the bobbin(40).

6. The motor stator according to any one of claims 1 to 5, wherein each of the adjacent turns(T1,T2,T3...Tn) in each of the coils(30) is attached to each other and the cross-sectional area of each turn(T1,T2,T3... Tn )in each of the coils(30) is substantially the same.

7. The motor stator according to any one of claims 1 to 6, wherein a three-phase bus-bar(50) is provided in the annular stator core(10) having three conducting elements(50a) and a neutral element(54), each conducting element(50a) having a plate(52), a connection end(51), and four welding ends(53) where the welding end(53) is connected to one of the ends of the metal wire(31) of one of the coils(30) respectively.

8. The motor stator according to any one of claims 1 to 7, wherein a width(W) of each metal wire(31) is increased gradually from one end(30a) to the other end(30b) so that the cross-sectional profile of each coil(30) is in the shape of a trapezoid.

9. The motor stator according to any one of claims 1 to 8, wherein the thickness(T) of each turn(T1,T2,T3...Tn) of the coils(30) is substantially the same, the thickness(T) of different turns (T1,T2,T3... Tn) of the coils(30) are decreased gradually.

10. The motor stator according to any one of claims 1 to 9, wherein each of the coils(30) occupies 80% of the capacity of two slots(15) of each of the tooth portions(20).

11. The motor stator according to any one of claims 1 to 10, wherein each of the tooth portions(20) is secured to the annular stator core(10) by a wedge buckle structure(21).
